# EUROPÄISCHE PATENTSCHRIFT

(11) **EP 1 254 007 B1**
(45) Veröffentlichungstag und Bekanntmachung des Hinweises auf die Patenterteilung: **29.09.2004**
(21) Anmeldenummer: 01909442.4
(22) Anmeldetag: 10.01.2001
(51) Int. Cl.: B29C 45/76, B43K 23/008

(54) **HERSTELLUNG EINES SCHREIBEGERÄTE-VORDERTEILS MIT EINSTÜCKIGEM VORFORMLING**
PRODUCTION OF A FRONT SECTION OF A WRITING IMPLEMENT, COMPRISING A ONE-PIECE PREFORM
PRODUCTION D'UNE PARTIE AVANT D'UN AUXILIAIRE D'ECRITURE A PREFORME D'UNE SEULE PIECE

(30) Priorität: 10.01.2000 DE 10000580
(43) Veröffentlichungstag der Anmeldung: 06.11.2002
(73) Patentinhaber: Merz & Krell GmbH & Co. KGaA, 64401 Gross-Bieberau (DE)
(72) Erfinder: VIAL, Siegbert, 35099 Burgwald (DE); GANTZERT, Erich, 64401 Gross-Bieberau (DE)
(74) Vertreter: Leonhard, Frank Reimund, Dipl.-Ing.
(86) Internationale Anmeldenummer: PCT/DE2001/000069
(87) Internationale Veröffentlichungsnummer: WO 2001/051269

(56) Entgegenhaltungen:
- DE-A- 19 936 177
- PATENT ABSTRACTS OF JAPAN vol. 18, no. 220 (M-1595), 20. April 1994 (1994-04-20) -& JP 06 015686 A (OKASHIRO KANAGATA KASEI KK), 25. Januar 1994 (1994-01-25) -& DATABASE WPI Week 199409 Derwent Publications Ltd., London, GB; AN 1994-068551 XP002167173
- PATENT ABSTRACTS OF JAPAN vol. 1999, no. 04, 30. April 1999 (1999-04-30) -& JP 11 019969 A (PENTEL KK), 26. Januar 1999 (1999-01-26)
- PATENT ABSTRACTS OF JAPAN vol. 1999, no. 05, 31. Mai 1999 (1999-05-31) -& JP 11 034569 A (PILOT CORP:THE), 9. Februar 1999 (1999-02-09)

## Beschreibung

Die Erfindung betrifft eine Herstellung eines vorderen Abschnitts (Frontabschnitts) des Gehäuses oder für ein Gehäuse eines Schreibgerätes mit Mine. Der vordere Abschnitt besteht aus einem Hülsenkörper aus einem formhaltigen Material (Vorformling) und aus einem den Hülsenkörper auf einem wesentlichen Teil seiner Länge flächig umgebenden Mantel aus griffelastischem Material. Der Mantel bildet bei Gebrauch des Schreibgerätes eine Griffzone, die den Fingern des Benutzers besonders guten Halt geben kann. Zu diesem Zweck kann die Außenfläche des Mantels auch konisch zulaufend geformt sein. Der Mantel kann eine dem Zweck angemessene, elastische Verformbarkeit aufweisen.

Aus **JP-A 06 015 686** (Okashiro) ist ein Hohlteil bekannt, welches in einem Längenabschnitt Durchbrechungen aufweist, durch welche ein Werkstoff (dort 5) hindurch gelangt, um auf der Außenseite des Hohlkörpers eine Form abzubilden. Der dort dargestellte Körper ist rein zylindrisch und besitzt keine Spitze. Es werden als Werkstoffe Polystyrol und Polyurethan vorgeschlagen.

Bei Schreibgeräten mit einem Schreibgeräte-Vorderteil, das aufgrund der besseren Handhabung meist konisch zulaufend ausgebildet ist, bereiten Anspritzpunkte oder Angußpunkten von elastischen Werkstoffen Schwierigkeiten, da der Werkstoff beim Abtrennen oder Lösen aus der Form unkontrolliert abreißt. Es ist deshalb ein Bestreben, diese Anspritzpunkte zu verbergen. Werden die Anspritzpunkte verborgen und wird ein Schreibgeräte-Vorderteil von innen durch seine Wandung mit dem griffelastischen Werkstoff außen umhüllt, kann ein Führungskanal für die thermoplastische Schmelze nicht durch die Minenöffnung (Minenbohrung bzw. Führungs- und Durchtrittsöffnung) hindurchgelegt werden, da diese auf übliche Minen abgestimmt einen zu geringen Durchmesser besitzt, um mit Kernen noch hinreichend wirtschaftlich einen Führungskanal bereitstellen zu können. Es ist deshalb erforderlich, den vorderen Bereich des Schreibgeräte-Vorteils im Durchmesser größer auszugestalten, um zunächst einen umfänglichen Mantel aus griffelastischem Werkstoff herumlegen zu können und anschließend in einem weiteren Arbeitsgang einen Spitzenbereich anzubringen, beispielsweise durch Ultraschall-Schweißen oder Reibschweißen. Dieser nachträglich angebrachte Spitzenbereich ist erst dann in der Lage, mit einem kleinen Durchmesser an seinem Frontende die Mine seitlich zu stützen. Es ist also kein einteiliger Hülsenkörper verwendbar, vielmehr ist aufgrund von Herstellungsprozessen zwangsläufig ein zweiteiliger Hülsenkörper aus einem ersten Abschnitt und einem später angebrachten Spitzenbereich notwendig.

Die Erfindung sieht ihre **Problemstellung** darin, diese Herstellung von Schreibgeräte-Vorderteilen kostengünstiger zu gestalten und Anspritzpunkte (Angußpunkte) von nachgiebigen Bereichen verborgen zu belassen, selbst dann, wenn ein einteiliger Hülsenkörper als Rohling für das Aufnehmen der umfänglich angeordneten (griffelastischen) Zone eingesetzt wird.

Um die einfachere und kostengünstigere Herstellung zu ermöglichen, sieht die Erfindung vor, daß ein Durchtritts- bzw. Führungsbereich an der Spitze des Hülsenkörpers (die Minenöffnung) als ein Abschnitt eines Einspritzkanals für das griffelastische Material des äußeren Mantels ausgebildet ist, zumindest teilumfänglich nach radial außen ohne eine metallische Führung eines in den Hülsenkörper vor seinem hinteren Ende (relativ) eingeschobenen stößelförmigen Kerns. Dieser beginnt vielmehr entweder erst nach dem Kanalsegment des Rohlings, ab einem Durchmesser, der einen praktischen Einsatz von Werkstofführung im Kern erlaubt, oder er hat eine nach radial außen offene Kanalführung (Anspruch 25).

Der Hülsenkörper (Anspruch 1) hat wenigstens eine Durchbrechung in seinem Mantelbereich, durch die der die Griffzone bildende Werkstoff aus dem Bereich des Einspritzkanalsegments von Innen nach Außen auf den äußeren Umfangsbereich des Hülsenkörpers weitergeleitet wird. Dabei kann die Durchtritts- und Führungsöffnung an der Spitze des Hülsenkörpers und/oder der anschließende Bereich des Inneren des Hülsenkörpers als ein sich zum Inneren des Hülsenkörpers erweiternder oder hinterschnittener Abschnitt ausgebildet sein (Anspruch 2,9,14).

Aufgrund dieser Ausbildung und der Möglichkeit, den in einer Zweikomponenten-Spritztechnik als zweites eingeführten Werkstoff, insbesondere einen thermoplastischen Elastomer, durch die im Hülsenkörper ausgebildete Minenöffnung umfänglich begrenzt einspritzen zu können, kann der Hülsenkörper selbst einteilig - ohne Schweiß- oder Verbindungsnaht - ausgebildet werden, was die Herstellung des Schreibgeräte-Vorderteils wesentlich vereinfacht, beschleunigt und demzufolge verbilligt (Anspruch 1).

Der Hülsenkörper kann zur besseren formschlüssigen Verankerung zwischen Mantel und Hülsenkörper zwei oder mehr als zwei über den Umfang verteilte Durchbrechungen aufweisen, die beim Formen (Anspritzen) des flächigen Mantels ausgefüllt werden (Anspruch 3). Um die Verankerung zu verbessern, kann wenigstens eine der Durchbrechungen eine sich von außen nach innen erweiternde Kontur aufweisen (Anspruch 4,15,16); nachdem die beiden Werkstoffe derZweikomponenten-Spritztechnik sich nicht stoffschlüssig verbinden, sorgt diese mechanische Gestaltung für besseren, auch flächenmäßig wirkenden Halt des Umgebungsmantels an dem formhaltigen - innen liegenden - Hülsenkörper.

Die Herstellung in Zwei-Komponenten-Spritztechnik (Anspruch 11,12) umfaßt die erste Komponente zur Herstellung des formstabilen Hülsenkörpers aus einem relativ spröden Kunststoff, wie ABS; die zweite Komponente dient zur Herstellung des Mantels und verwendet einen thermoplastischen Elastomer (TPE). Es wird zunächst der formhaltige Hülsenkörper mit der Durchtritts- und Führungsöffnung (für die später eingesetzte Mine) sowie mit wenigstens einer, bevorzugt zwei Durchbrechungen in seiner Umfangswand hergestellt. Auf einer deutlichen Länge - einem Vielfachen des Durchmessers der Minenöffnung - der Umfangswand wird das den äußeren Mantel bildende Elastomer bis weit in den Spitzenbereich aufgebracht, wobei es durch die Durchtritts- und Führungsöffnung des Hülsenkörpers in dessen Innenraum eingespritzt, insbesondere berührend geführt und geleitet wird, um von dort durch die Durchbrechung(en) hinaus nach außen auf die Umfangswand des Hülsenkörpers geleitet und dort zum umfänglich zusammenhängenden Mantel ausgeformt zu werden.

Nicht störend ist dabei, wenn der Strom des Zweitwerkstoffs beim Einspritzen nach seinem Eindringen in die Durchtritts- und Führungsöffnung im Inneren des Hülsenkörpers zunächst querschnittserweitert und dann erst über die Durchbrechung des Vorformlings nach außen geleitet wird (Anspruch 17,19). Bei der Herstellung wird die Durchtritts- und Führungsöffnung (Minenöffnung) mit einem sich zum Inneren des Hülsenkörpers erweiternden Querschnitt oder mit einer Hinterschneidung von einem eingeführten Kern ab einer axialen Stelle gesperrt (Anspruch 17), die hinter, insb. deutlich hinter, dem vorderen Ende der Minenöffnung liegt. Auf diese Weise wird die Minenöffnung (die Spitzenbohrung) Bestandteil des die Schmelze des Zweitwerkstoffs leitenden "Einspritzkanals" und kann deshalb klein im Durchmesser sein (Anspruch 9) - entsprechend der später eingesetzten Mine - ohne dem Spritzvorgang bei der Nachdruckphase einen zu hohen Strömungswiderstand entgegenzusetzen. Das Einführen eines bis nach vorne reichenden Kerns zur Führung der Schmelze ist entbehrlich.

Eine besondere Ausbildung der Spitze des Kerns (Anspruch 27) kann aber bei Beibehaltung des erfinderischen Gedankens dazu führen, daß sich der Kern doch weiter in den Spitzenbereich bis hin zur Minenöffnung hinein erstreckt. In diesem Bereichen wird aber kein innerer Führungskanal des Kernes benötigt, der eine metallische Außenabdeckung besitzt, vielmehr wird auch hier zumindest ein Abschnitt des Umfanges (bei seitlich offenen Kanälen) oder aber der gesamte Umfang (bei einer Konusspitze des Kernes) der Innenfläche des Hülsenkörpers verwendet, um die vom Kernkopf offengelassenen Führungskanäle zu schließen. Der Führungskanal kann dabei ringförmig ausgestaltet sein (Anspruch 28). Es sind dabei eine Vielzahl von Kombinationen möglich, beginnend bei einem kürzeren Kern, der nicht bis ganz zur Minenöffnung ragt, sondern eine axiale Länge frei läßt (Anspruch 26, Anspruch 6, Anspruch 29). Zumindest ein Führungskanalwandstück ist vorgesehen, das einen sich axial und umfänglich erstreckenden Wandbereich eines Führungskanals bildet, der die Schmelze des Zweitwerkstoffes aufnimmt und zu der zugehörigen Durchbrechung leitet (Anspruch 7, 8). Die Länge des zugehörigen Wandstücks ist zumindest die Hälfte des Durchmessers der Minenbohrung, bevorzugt größer als der Durchmesser der Minenbohrung (Anspruch 5, 9).

Nachdem die Anspritzpunkte (Trennstellen) des griffelastischen Mantels innen liegen (Anspruch 10), können sie beim Abtrennen von Angußkanälen unkontrolliert abreißen und stören die Handhabung sowie das äußere Erscheinungsbild nicht (Anspruch 18).

Der Hülsenkörper kann einteilig ausgestaltet werden, selbst dann, wenn seine vordere Öffnung auf einen normalen Minendurchmesser angepaßt ist, also zu eng ist, um einen Kern zusätzlich noch aufzunehmen, der außerdem einen inneren Kanal zur Durchführung des erweichten Kunststoffes besitzen soll. Gleichzeitig wird durch die Verwendung der Spitze in einem kurzen aber deutlichen Abschnitt als Führungskanal-Segment (auch "Anguß-Kanalsegment") sichergestellt, daß keine zusätzlichen Engstellen im Gesamt-Strömungskanal hinzukommen, so daß die Nachdruckphase beim Spritzvorgang problemlos möglich ist, um den Schwund des Zweitwerkstoffes auszugleichen. Ein durch zusätzliches Befestigen eines konischen Spitzenbereichs erforderlicher zweiter Arbeitsgang entfällt, was sich kostengünstig auf die Fertigung auswirkt.

Als weiterer vorteilhafter Effekt der Erfindung kann die Griffzone weiter in den Spitzenbereich hineinreichen, da kein Spitzenbereich von ungefähr 1,2 bis 1,5 cm Länge nachträglich angefügt werden muß. Prinzipiell wäre es dabei sogar möglich, die elastische Griffzone bis praktisch vollständig von außen an die Minenöffnung heranzuführen, so daß kein sichtbarer Rohling aus festerem Kunststoff mehr aus der Griffzone frontseitig hervorragt.

Selbst das Entformen des so eingespritzten Werkstoffs, der als Kanalsegment die von dem Minendurchmesser vorgegebene Minenbohrung (Minenöffnung) verwendet, ist unbedenklich, auch dann, wenn ein üblicher Hülsenkörper eine sich nach innen erweiternde Gestalt der Minenbohrung besitzt. Ist der Werkstoff griffelastisch, auch im verfestigten Zustand, kann er dennoch axial nach vorne herausgezogen werden, wobei die innen liegenden Anbindungspunkte abgeschert oder abgerissen werden. Sie können bevorzugt sehr viel dünner gestaltet werden, als der übrige Kanalabschnitt, haben auf die Nachdruckphase dennoch kaum Einfluß, nachdem sie von sehr kurzer Länge sind (Anspruch 10,20,18), in Flussrichtung des Werkstoffs (im wesentlichen radial).

Eine zusätzliche Verbesserung des Abtrennens ergibt sich bei entsprechender Ausbildung der Verteilerkanalstücke, die im Kern so vorgesehen sind, daß sie die über das Kanalsegment des Hülsenkörpers zugeführte TPE-Schmelze radial umlenken. Wenn sie Schnittkanten oder zumindest scharf ausgebildete obere Ränder besitzen, kann der Angußstutzen leicht mit einem Zieherkern herausgezogen werden, auch bei einem gegen die Zugrichtung ausgebildeten Konusabschnitt in der Minenbohrung (Anspruch 19). Vorteilhaft sind konische Bohrungen im Kern (Anspruch 29).

Der Hülsenkörper mit mehreren, über seinen Umfang verteilten Durchbrechungen dient zur Mehrstellen-Verankerung des Mantels am Hülsenkörper, wobei alle mit dem Mantelwerkstoff ausgefüllt werden (Anspruch 3). Das thermoplastische Material braucht dabei aber von dem Einspritzkanal des Hülsenkörpers nur über einen oder zwei dieser Durchbrechungen nach außen geleitet werden, während die übrigen Durchbrechungen auch von außen aus dem Mantelbereich her ausgefüllt werden können (Anspruch 16).

Das Einführen des Kerns in den Hülsenkörper hat insoweit vorsichtig zu geschehen, als der Hülsenkörper mit einem konischen Gewinde versehen sein kann und deshalb bei axialen Kräften leicht aus seiner Halterung herausgedrückt werden kann, wenn der Formraum noch nicht geschlossen ist. Um das zu vermeiden, wird zunächst der hülsenförmige Rohling bevorzugt durch eine Schwenkbewegung und sitzend in seiner Halterung in den Formraum bewegt und der Kern ein Stück weit aber nicht vollständig, bevorzugt etwa 80% bis 90%, in den Rohling eingeschoben (Anspruch 21). Danach schließt sich eine Formplatte mit der eine Fertigspritzkavität gehalten wird und erlaubt ein frontseitiges Stützen des hülsenförmigen Rohling durch eine kreis oder ringförmige Stützlinie. Nachdem der Rohling gestützt ist, wird der Kern vollständig eingeschoben, ohne den - jetzt gestützen - Rohling aus seiner Halterung zu drücken.

Die Erfindung wird nachfolgend an Ausführungsbeispielen erläutert und ergänzt.
- **Figur 1**: zeigt einen vorderen Abschnitt 1 eines hülsenförmigen Gehäuses für ein Schreibgerät mit - nicht dargestellter - Mine in Seitenansicht.
- **Figur 2**: ist ein Querschnitt entlang der Schnittlinien-Ebene II-II der Figur 1.
- **Figur 3**: ist ein Längsschnitt durch den in Figur 1 gezeigten Abschnitt 1.
- **Figur 4**: ist eine Seitenansicht eines bei dem Einspritzen eines Zweitwerkstoffes einsetzbaren Kerns 20 zur Weiterleitung und Verteilung des eingespritzten Materials.
- **Figur 5**: ist ein Längsschnitt durch ein Spritzformwerkzeug, das für das Anspritzen des Mantels eingesetzt wird.
- **Figur 5a**: ist ein Ausschnitt aus dem Spritzformwerkzeug von Figur 5 mit eingesetztem Rohling 4 und einem alternativen Kern 20.
- **Figur 5b**: ist ein Ausschnitt aus dem Spitzformwerkzeug der Figuren 5,5a mit einem weiteren alternativen Kern 20.
- **Figur 6a**: ist eine Gestaltung des Spitzenbereichs (Kernkopf) des Kernes von Figur 5a, bei dem zwei sich kreuzende und schräge Bohrungen 25a,25b, die außerdem leicht konisch sind, in den Kopfabschnitt 22 des Kernes eingebracht sind.
- **Figur 6b**: ist eine Verdeutlichung des Kernkopfes 22a des Kernes 20 von Figur 5b mit einem konischen Abschnitt 22b zur Ausbildung eines ringförmigen Führungskanals 27, der sinngemäß in Figur 6b eingezeichnet ist, deutlich aber im eingefahrenen Zustand des Kernes aus Figur 5b hervorgeht.

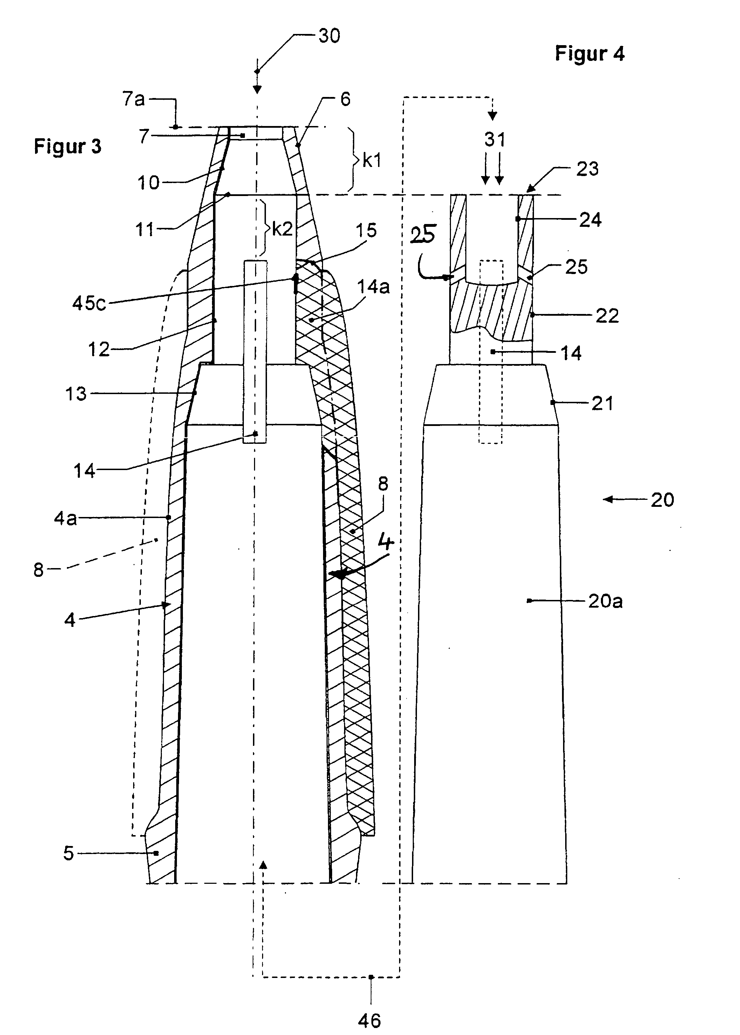

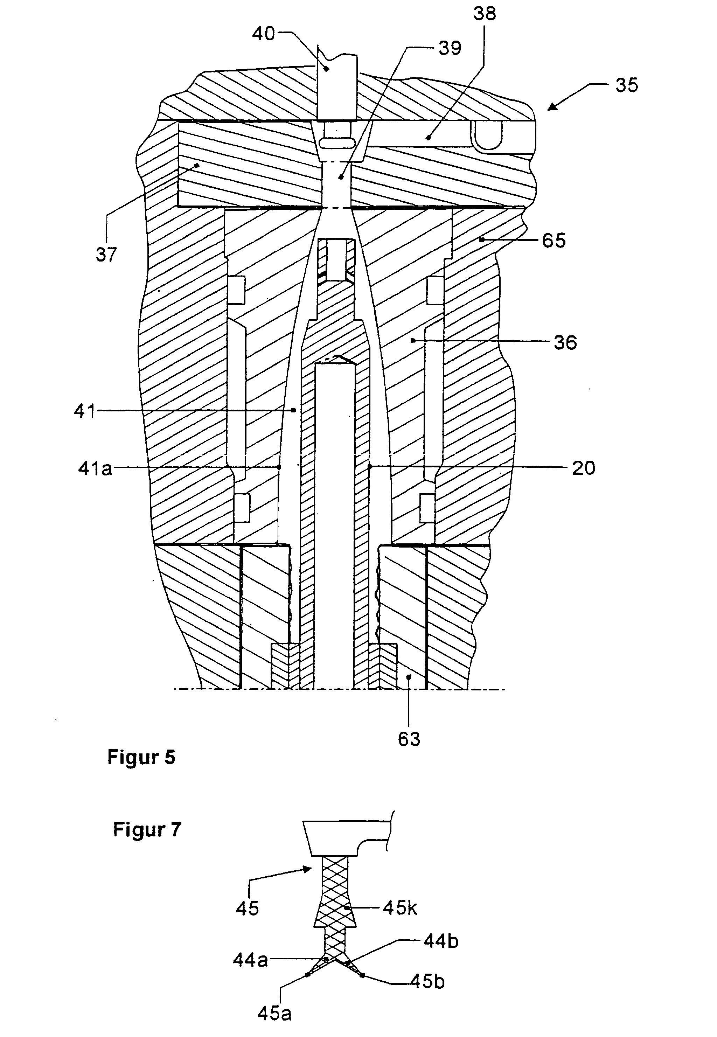

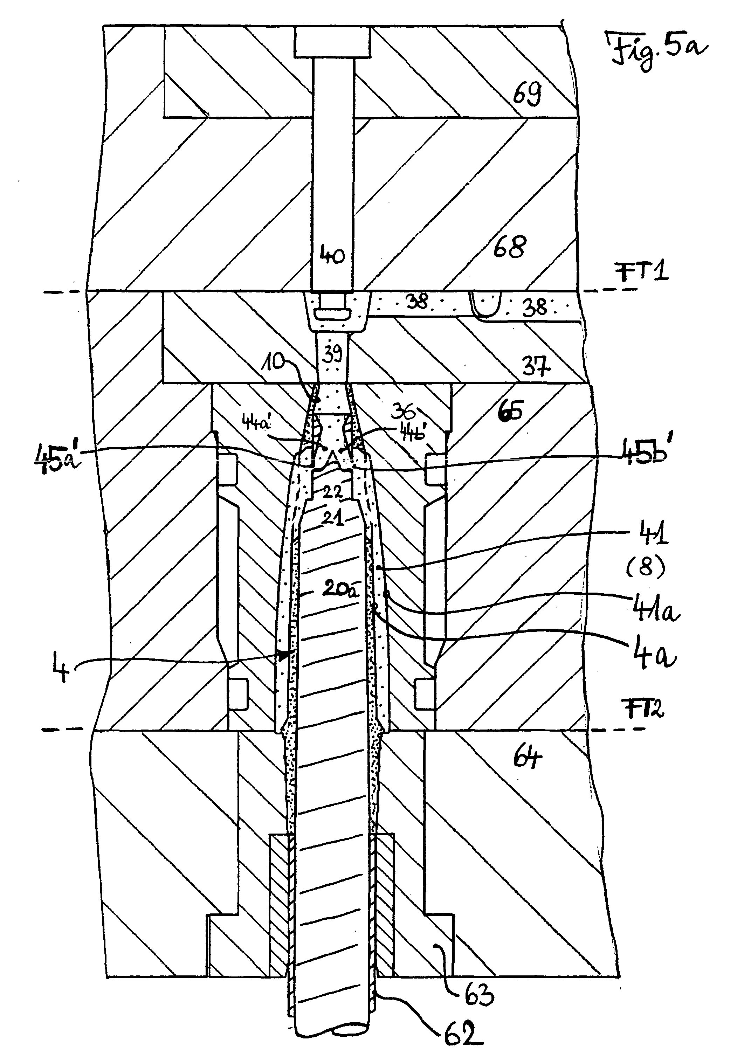

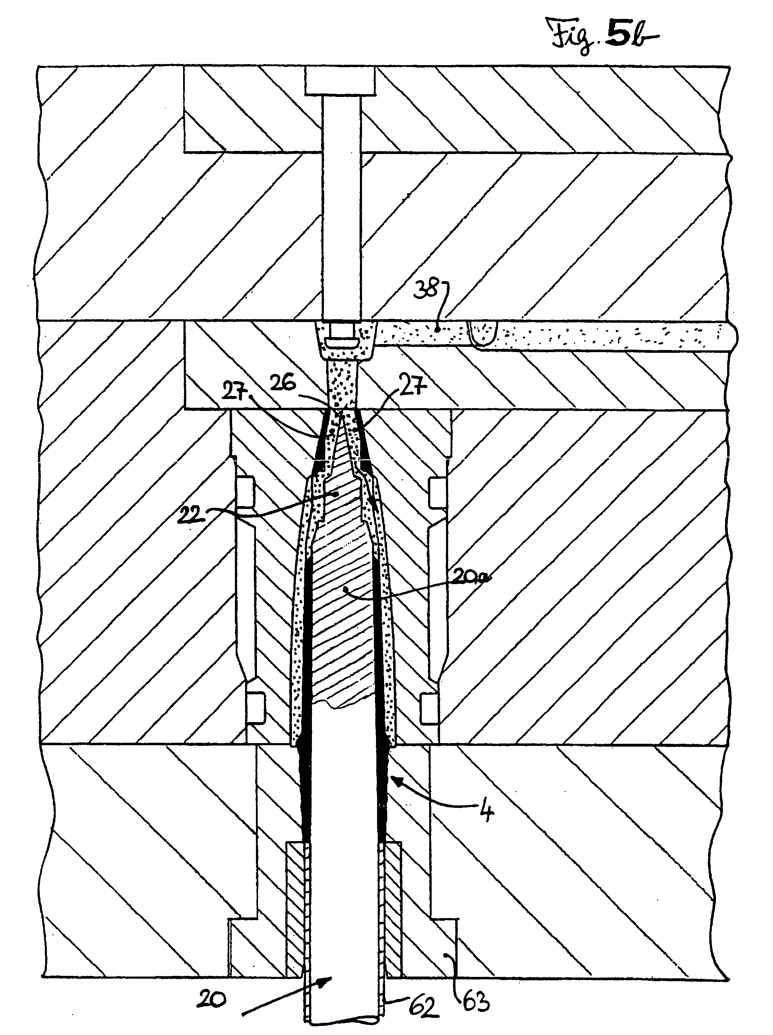

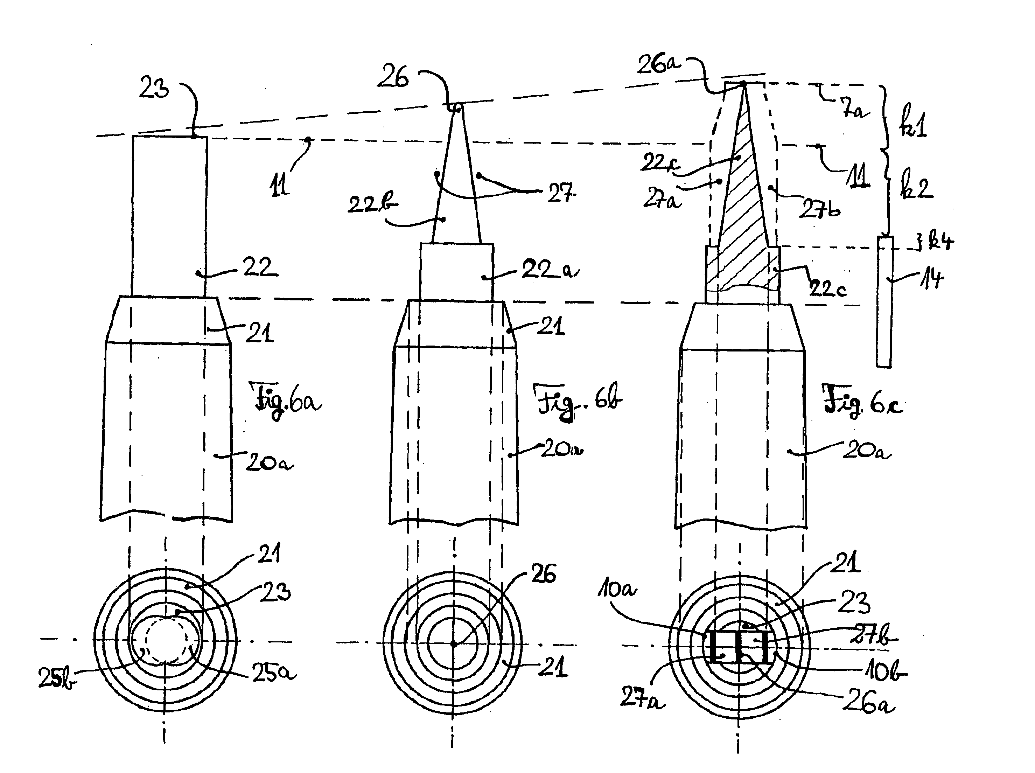

- **Figur 6c**: ist eine noch weitere Gestaltung des Kernes in seinem Kopfbereich 22c, der - wie in allen Figuren 6 - auch aus der dargestellten Aufsicht in axialer Richtung deutlich wird. Zwei axial orientierte, aber umfänglich gegenüber Figur 6b begrenzte Kanäle 27a,27b führen bei Einsetzen des Kernes von Figur 6c in das Werkzeug von Figur 5 dazu, daß ein jeweiliger Abschnitt 10a,10b von dem konischen Abschnitt 10 der Figur 3 als radial äußere Begrenzung des jeweiligen Führungskanals, also als dessen äußere Wand dient, selbst dann, wenn der Kern gemäß der Gegenüberstellung der Figuren 6a, 6b und 6c weiter zur Minenöffnung 7 hineinragt.
- **Figur 7**: zeigt einen nach der Fertigstellung des vorderen Abschnittes durch die Einspritzöffnung axial nach außen entfernten Anspritzstutzen 45, der invers die Gestalt der Minenöffnung 7,10 des Vorformlings verdeutlicht.

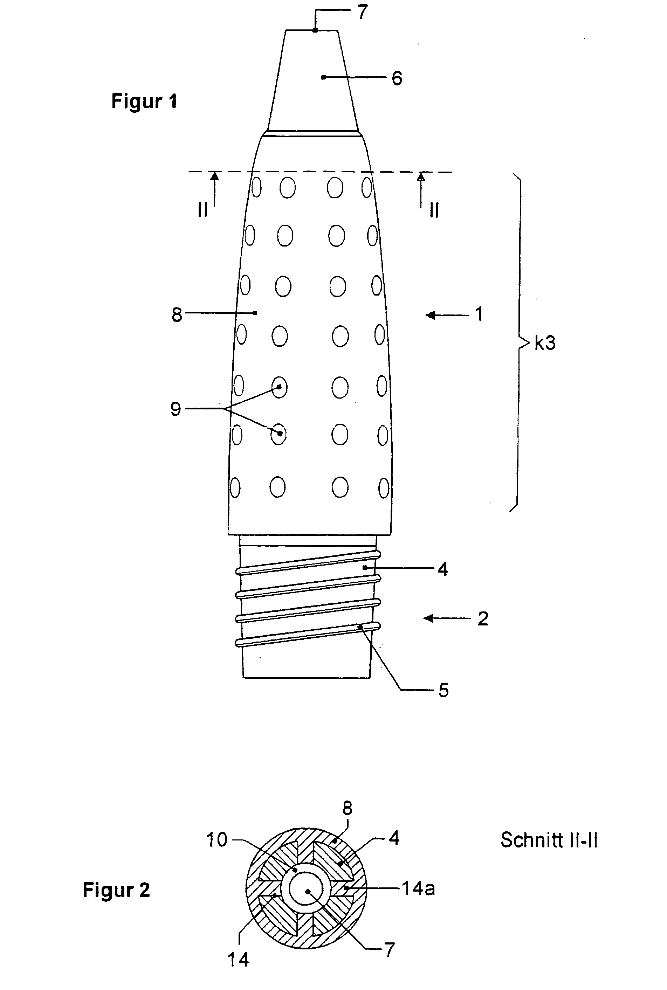

Ein vorderer Abschnitt 1 eines nicht dargestellten Schreibgerätegehäuses besteht nach **Figur 1** aus einem inneren Hülsenkörper 4 aus formhaltigem (festem) Kunststoff und einem einen Teil der Länge des Hülsenkörpers 4 umgebenden Mantel 8 aus einem thermoplastischen Elastomer. Der Mantel erstreckt sich zwischen einem Spitzenbereich 6 des Abschnittes 1 und einem rückwärtigen Verbindungsabschnitt 2, der zum Beispiel mit einem Gewinde 5 versehen sein kann. Die Spitze 6 weist eine Durchtritts- und Führungsöffnung 7 auf, durch die - wenigstens in der Schreibstellung-das vordere Ende einer Mine ragt und seitlich geführt und gehalten ist; diese Öffnung soll deshalb als "Minenöffnung" bezeichnet werden.

Der flächige Mantel 8 kann zur Erhöhung der Griffigkeit auf seiner Außenfläche strukturiert sein, zum Beispiel mit einer Mehrzahl von kleinen Vertiefungen 9 oder vorspringenden Noppen. Vom Wesen her ist der den Mantel bildende Zweitwerkstoff griffelastisch, zur Verbesserung der Hauptfunktion des Haltens des Schreibgerätes in seiner Griffzone.

Auf einem axialen Längenabschnitt k3, der von dem Mantel 8 umgeben ist, weist der Hülsenkörper 4 wenigstens eine Wanddurchbrechung 14 auf. Im dargestellten Beispiel der **Figur 2** sind vier in Umfangsrichtung gleichmäßig verteilte, schmale und langgestreckte Schlitze 14 als Durchbrechungen vorgesehen. Diese sind im fertigen Zustand mit dem Material des Mantels 8 vollständig ausgefüllt 14a und bilden so eine formschlüssige - nicht stoffschlüssige - Verankerung des elastomeren Mantelmaterials mit dem Hülsenkörper 4.

Um die Gefahr einer Trennung in radialer Richtung der beiden Teile 4,8 zu senken, kann wenigstens eine Begrenzungsfläche der oder einer der Durchbrechungen 14 von außen nach innen hinterschnitten ausgebildet sein, wie dies bei 15 an den Haltestegen 14a in **Figur 3** gezeigt ist. Bezogen auf Figur 2 ist ersichtlich, daß in Figur 3 der Hülsenkörper auf der linken Seite in einer Ebene geschnitten ist, die um 45° gegenüber der Schnittebene auf der rechten Seite der Figur 3 geschwenkt ist.

**Figur 5** zeigt das Spritzformwerkzeug 35 zum Anspritzen des Mantels mit eingeführtem Kerns 20, jedoch ohne den Hülsenkörper, der zum Ausformen des Mantels einen Teil der Spritzform bildet. Der Kern 20 bildet zusammen mit einem inneren Teil 36 der Spritzform eine Formkammer 41, die von dem vorgefertigten Hülsenkörper 4 und einem einzuspritzenden Mantelwerkstoff 8 ausgefüllt wird.

Aus Figur 3 ist ersichtlich, daß der Hülsenkörper 4 in seinem Spitzenbereich 6 anschließend an die Minenöffnung 7 auf einer Länge k1 konisch erweitert 10 ist. Die Erweiterung endet in der Ebene 11. Ab dort ist die Innenfläche 12 des Hülsenkörpers 4 zylindrisch. Sie erweitert sich nach dem zylindrischen Abschnitt 12 dann noch einmal konisch bei 13, um sich dann zylindrisch oder mit schwacher Erweiterung bis zu ihrem Gewinde 5 hin zu erstrecken. Die Durchbrechungen 14 sind im Abstand k2 vom Ende 11 der ersten Erweiterung 10 angeordnet. Die Außenwand 4a des Hülsenkörpers 4 trägt den Mantel 8.

Zum Einspritzen des Mantelmaterials dient eine äußere, mehrteilige Form nach **Figur 5** zur Ausformung der Außengestalt des Mantels 8, während in das Innere des zuvor abgeformten Hülsenkörpers 4 ein das Innere des Hülsenkörpers 4 nahezu vollständig ausfüllender Dorn oder Stempel 20 (im Folgenden: Kern) eingeführt werden kann, wie er in **Figur 4** gezeigt ist. Der Kern 20 ist der inneren Gestaltung des Hülsenkörpers 4 angepaßt und weist einen, der Fläche 13 angepaßten Konus-Abschnitt 21 und einen in den zylindrischen Abschnitt 12 ragenden und daran angepaßten Kopf-Abschnitt 22 mit Stirnfläche 23 sowie einen ganz leicht konischen Rumpfabschnitt 20a auf.

Eine Stirnfläche 23 des Kerns 20 endet in der Spritzstellung an der Ebene 11 vor der konischen Erweiterung 10 im Spitzenbereich 6 des Hülsenkörpers 4, also etwa im Abstand k1 von der Minenöffnung 7.

Damit wird in der Spritzstellung der Innenraum des Hülsenkörpers 4 praktisch bis zur Ebene 11 von dem Stempel 20 ausgefüllt. Die Minenöffnung 7 bildet zusammen mit der Erweiterung 10 für den Einspritzvorgang des thermoelastischen Mantelmaterials auf der Länge k1 einen Einspritzkanal, in den das Zweitmaterial über Kanäle 38,39 der Spritzform stirnseitig eingespritzt werden kann. Der Stempel 20 weist unterhalb dieses Einspritzkanalsegments 7,10,k1 eine Bohrung 24 auf, die zusammen mit seitlichen Austrittsbohrungen 25 ein Aufnahme- und Verteilerkanalsegment für das eingespritzte Material 30 bilden, durch die der Materialstrom 31 zu wenigstens einer der Durchbrechungen 14 geleitet wird. Bevorzugt sind die Verteiler 25 X- oder V-förmig und gehen direkt von der Stirn 23 aus.

Aus **Figur 4** ist ersichtlich, daß im eingeführten Zustand die Verteiler 25 im Bereich von wenigstens zwei sich gegenüberliegenden Durchbrechungen 14 münden. Es können auch alle Durchbrechungen mit dem Aufnahmekanalstück 24 verbunden sein. Es reicht aber auch aus, wenn einige der Durchbrechungen 14 aus dem äußeren Formraum 41, also von außen nach innen ausgespritzt werden.

Der Hülsenkörper 4 mit seinen Durchbrechungen 14 ist in Verbindung mit dem Kern 20 so ausgebildet, daß beim Entnehmen des Stempels und/oder des ausgeformten vorderen Abschnittes 1 aus der Spritzform das griffelastische Material im Bereich einer Grenzfläche zwischen innerem Umfang des Kanalstücks 24 des Kerns 20 und dem Hülsenkörper 4 von dem am Hülsenkörper ausgeformten Mantel und dem die Durchbrechungen 14 ausfüllenden thermoplastischen Material 14a getrennt, zum Beispiel abgerissen oder abgeschert wird, so daß ein Anbindungspunkt 45c verbleibt. Es bleibt somit ein zusammenhängender Angußstutzen 45, der in den Kanälen 38,39 der Spritzform und in dem Einspritzkanal 7,10 des Hülsenkörpers 4 sowie in dem (den) Verteilerkanälen 24,25 verfestigt ist. Dieser wird zum Beispiel mit Hilfe des Zieherkerns 40 aus dem Kanalsegment 7,10,24,25 nach außen entfernt. Dieser Anspritzrest 45 ist in **Figur 7** dargestellt. Das Entfernen ist trotz der Konizität 45k des Einspritzkanals ohne weiteres möglich, da ein entsprechend elastomeres Material für den Mantel verwendet wird und die Verteiler-Anbindungen 44a,44b bei 45a,45b abgetrennt werden. Hier liegen die Dünnstellen des Spritzgußkanals.

Weitere Teile der Spritzvorrichtung 35 sind aus **Figur 5a** mit einem später erläuterten alternativen Kern ersichtlich. Der Weg des einzuspritzenden Materials ist durch die Pfeile 30 und 31 in Figuren 3,4 angedeutet. Der Vorgang des Aufsetzens des Rohlings 4 auf den Kern 20 ist durch den Pfeil 46 deutlich gemacht, um die relative Lage der Durchbrechungen 14 zum Kern in Figur 4 zu verdeutlichen.

Die Spritzvorrichtung 35 ist eingehender anhand der Figur 5a zu erkennen, hier mit einem von vielen parallel eingesetzten Rohlingen 4 (punktiert) und einem bereits ausgeformtem Mantel 8 (lockerer punktiert), durch radial orientierte Durchbrechungen 14 zur Ausbildung der Haltestege 14a, hier deutlicher ersichtlich mit X-förmigen Verteilerkanälen 25 ausgehend von der Stirn 23 des Kerns 20, von wo über einen Abschnitt k1 ein Kanalsegment von dem Hülsenkörper 4 gebildet wird. Am unteren Rand der Formkavität 41 ist der Hülsenkörper in einem Gewindeabschnitt 5 von einer Gewindebuchse 63 radial aufgenommen. Die Gewindebuchse wird mit der Drehplatte 64 von dem ersten Spritzvorgang herüberbewegt, positioniert den Hülsenkörper unterhalb der axial nach oben bewegten Formplatte 65 und bevor das Werkzeug sich schließt, schiebt die Drehplatte 64 relativ (auch durch axiale Senkbewegung der Formplatte 65) den Hülsenkörper 4 in den Formraum 41, der von einem inneren Formeinsatz 36 (Fertigspritzeinsatz) mit seiner Innenfläche 41a gebildet wird, die gleichzeitig die Form der äußeren Oberfläche des Mantels 8 festlegt.

Beim Einfahren des Kerns 20 wird innerhalb einer Buchse auch eine Ausstoßerhülse 62 an das axiale Ende des Gewindes 5 angelegt, so daß ein späteres Ausstoßen des fertigen Frontabschnitts möglich ist, nachdem sich die Formplatte 65 erneut gehoben hat.

Um eine frühzeitige Lösung des hier konisch gezeigten Gewindes 5 des Rohlings bei dem Einfahren des Kernes 20 zu vermeiden, fährt dieser zunächst nicht vollständig in den Rohling 4 ein und stoppt seine Einfahrbewegung spätestens dann, wenn der vordere Abschnitt 22 mit den gekreuzten Kanälen beginnt, in den zylindrischen Abschnitt 12 von Figur 3 einzufahren. Bevor dies geschieht, wird zunächst die Formplatte 65 mit dem Fertigspritzeinsatz 36 vollständig auf die Drehplatte 64 gelegt, so daß die Form geschlossen ist. Der Rohling 4 kann dann nicht nach axial vorne ausweichen und wird entweder durch eine zusätzliche Verteilerplatte 37 oder durch die Innenwand 41a der Kavität 41 so gehalten, daß eine Vervollständigung der Einfuhrbewegung des Kernes 20 ohne Lösen des Gewindes aus dem Gewindehalter 63 des Rohlings 4 möglich ist.

Nachdem die Form vollständig geschlossen ist und alle eingezeichneten Platten 64, 65, 37, 68 und 69 aufeinanderliegen, beginnt der Einspritzvorgang.

Das Einspritzen des Elastomer-Materials über die Kanäle 38,39 in die Minenöffnung des Hülsenteils 4 erfolgt über die Verteilerplatte 37, die oberhalb der Formplatte 65 flächig aufliegt. Oberhalb der Verteilerplatte 37 ist eine Abstreiferplatte 68 und darüber eine weitere Platte 69 zur Betätigung des Zieherkerns 40 angeordnet.

Nach Fertigstellung des Einspritzvorganges des Elastomers und seines Erkaltens bzw. Aushärtens wird zunächst die Abstreiferplatte 68 axial nach oben bewegt, wobei sie über den Zieherkern 40 den gesamten Angußabschnitt 38,39,10,25, wie in Figur 7 dargestellt, aus dem Vorderteil des Hülsenkörpers und der Verteilerplatte 37 herauszieht. Dieser Anguß verbleibt anliegend an der Platte 68 und kann durch Relativbewegung der Platten 68,69 auch von dieser getrennt werden. Die Dünnstellen 45a,45b am Übergang des Zufuhrkanales zu den Stegen 14a des Mantels 8 bilden die Trennstellen, die bei der Aufwärtsbewegung der Platten 68,69 mit dem Zieherkem 40 abgerissen werden. Nach Anheben der Platten 37,68,69 kann die Formplatte 65 ebenfalls angehoben werden, der Kern 20 aus dem fertigen Formteil herausbewegt werden und über die Ausstoßhülse 62 der Frontabschnitt vollständig entformt werden. Die Drehplatte 64 wird dann erneut so zurückgeschwenkt, daß die Gewindebuchse 63 in dem Bereich des Werkzeuges zu liegen kommt, in welchem der Vorformling 4 mit dem Erstwerkstoff gefertigt wird.

Ersichtlich sind an Figur 5a zwei Trennebenen FT1 und FT2, wobei die erste Trennebene die Anguß-Trennebene ist, in der die ausgehärteten Zufuhrkanäle des thermoplastischen Elastomers getrennt werden, während die zweite Ebene FT2 die Haupt-Trennebene zur Formtrennung und Freigabe des Fertigteiles ist.

Der bislang nur andeutungsweise erläuterte alternative Kern 20 der Figur 5a, der in seinem Frontabschnitt von der Gestaltung der Figuren 4,5 abweicht, soll mit Bezug auf **Figur 6a** verdeutlicht werden. Bis zu dem konischen Abschnitt 21 ist der Kern 20 identisch wie derjenige der Figur 5. Nur der Kopfabschnitt 22 ist hinsichtlich der Kanalführung 25a,25b geändert. Die Figur 6a zeigt diese Kanalführung in einer axialen Aufsicht und die Figur 5a verdeutlicht die Kanalführung im Querschnitt. Es handelt sich um zwei sich kreuzenden Kanäle 25a,25b, die leicht konisch mit einem Winkel von 10° ausgebildet sind. Die Kanalführung beginnt jeweils in der Stirnfläche 23 und erstreckt sich bis vor den konischen Abschnitt 21. Genauer gesprochen mit Bezug auf die Durchbrechung 14 enden die Kanäle an der radial äußeren Wand des Abschnittes 22 des Kernes in einem Abstand k4 von dem Beginn der Durchbrechung 14. Die Überlappung k4 sorgt dafür, daß der erweichte Werkstoff für den Mantel 8 die Durchbrechung 14 erreicht. Aus Figur 5a sind dabei Dünnstellen 45a' und 45b' ersichtlich, die am unteren Ende durch die teilweise noch als Sacklochbohrung vorgesehenen Kanäle 25a,25b zum Rand hin entstehen.

Bei der beschriebenen Ausbildung der im Kern 20 fortgesetzten Kanäle bildet sich ein Anspritzrest entsprechend abgewandelt von Figur 7, aber dennoch mit zwei Anbindungsarmen 44a' und 44b', die zum erleichterten Entformen bei einer (relativen) Rückwärtsbewegung des Kernes die konische Ausbildung der Bohrungen 25a und 25b wiederspiegeln und die Dünnstellen 45a' und 45b' als Trennstellen benutzen

Eine noch weitere Gestaltung des Kopfabschnittes 22 des Kernes ist aus **Figur 5b** ersichtlich, die im übrigen hinsichtlich des Formwerkzeuges identisch wie diejenige von Figur 5a ist. Hier ist der Rohling 4 ebenfalls in der Spritzkavität 41 eingebracht und es ist der Weg des Zweitwerkstoffes durch einen Pfeil gekennzeichnet, wie er durch die eine Durchbrechung 14 im Rohling 4 hindurchgeleitet wird. An Figur 5b fällt auf, daß die axiale Längserstreckung des Kernes durch eine Konus-Ausbildung 22b des Kopfes gemäß **Figur 6b** bis praktisch zur Öffnung 7 reicht. Trotz dieser nach oben erweiterten Erstreckung des Kernes verbleibt eine umfängliche Führung des Kanalabschnitts der Länge k1 und hier auch eines zusätzlichen Kanalabschnittes der Länge k2, deren Zweck bislang vom Inneren des Kernes und den in Figur 5a erläuterten gekreuzten Bohrungen erfüllt wurde. Der Rohling hat in seinem Spitzenbereich also weiterhin die umfänglich erstreckende Wand zur Begrenzung des Stromes des Zweitwerkstoffes, während der Kern durch die konische Ausbildung 22b mit Spitzenpunkt 26 die radiale Ablenkung zu den Durchbrechungen 14 bewirkt. Es bildet sich gemäß Figur 5b in Verbindung mit 6b ein sich im Durchmesser vergrößernder Ringkanal 27 zwischen der Außenfläche des Konus 22b und der Innenwand 10 des Spitzenbereiches des Rohlings 4.

Eine noch weitere Ausgestaltung soll allein anhand der **Figur 6c** erläutert werden. Sie paßt identisch auf diejenigen Kerne der Figuren 5,5a und 5b, jeweils mit dem in Figur 6c gezeigten geänderten Kopfabschnitt 22c oberhalb des Konusbereiches 21.

Aus der Aufsicht in Figur 6c wird erkennbar, daß hier zwei Kanäle 27a,27b in axialer Richtung gelegt sind, die keine vollumfängliche Erstreckung haben, sondern nur eine begrenzte Kanalbreite. Die Kanäle sind nach radial außen offen und werden in den Bereichen 10a, 10b von den entsprechend gegenüberliegenden inneren Wandabschnitten des Bereiches 10 des Rohlings 4 oberhalb der Ebene 11 geschlossen.

Die Spitze 26a der Ausbildung 22c des Kernkopfes ist linienförmig, kann aber bei drei oder vier umfänglich verteilten Kanälen (entsprechend den Kanälen 27a,27b) auch eine abgewandelte Form erhalten. Im Bereich k1+k2 wird eine Führung des Zweitwerkstoffs zum Zeitpunkt des Einspritzens erreicht, die von einem umfänglich begrenzten Abschnitt der inneren Oberfläche des Rohlings erfolgt. Nur symbolisch ist die Durchbrechung 14 in Figur 6c hinsichtlich ihrer Höhe und Anordnung eingezeichnet, so daß im Bereich k4 der Übertritt des Zweitwerkstoffes durch die Durchbrechung zum äußeren Bereich des Mantels 8 - also in die Formkavität 41 - erfolgen kann.

Der Abschnitt k4 ist nur ein kleiner Teil der gesamten Länge der Durchbrechung 14, insbesondere deutlich weniger als ein Drittel seiner Länge.

Aufgrund der beschriebenen Ausbildung und Verfahrensweise ist es möglich, den formstabilen Hülsenkörper 4 einstückig auszubilden, so daß für die Herstellung des vorderen Abschnittes nur zwei Schritte und zwei Spritzvorrichtungen und keinerlei zusätzliche Montageschritte notwendig sind.

## Patentansprüche

1. **Frontabschnitt** (1) eines Gehäuses eines Schreibgerätes, welcher Abschnitt einen Hülsenkörper (4) aus einem formhaltigen Werkstoff und einen den Hülsenkörper auf einem wesentlichen Teil seiner axialen Länge flächig umgebenden Mantel (8) aus einem zweiten Werkstoff aufweist, wobei
(a) der Hülsenkörper (4) wenigstens eine radial orientierte Durchbrechung (14) für einen seitlichen Austritt des zweiten Werkstoffs zu einem äußeren Umfangsbereich (4a) des Hülsenkörpers (4) aufweist;
(b) eine nach vorne orientierte Öffnung (7) einer Spitze des Hülsenkörpers (4) als Beginn eines sich anschließenden axialen Segments (7,10,k1) eines Einspritzkanals (38,39,10,24,25) für den zweiten Werkstoff ausgebildet ist.

2. Frontabschnitt nach Anspruch 1, wobei das sich an die Öffnungslinie oder das Öffnungsende (7) anschließende axiale Segment als ein Bereich (k1) einer Innenfläche des Hülsenkörpers (4), insbesondere als sich nach rückwärts erweiternder Bereich (10) ausgebildet ist.

3. Frontabschnitt nach Anspruch 1 oder 2, **dadurch gekennzeichnet, daß** der Hülsenkörper (4) zwei oder mehr Durchbrechungen (14) über seinem Umfang verteilt aufweist, die zur formschlüssigen Verankerung des Mantels (8) am Hülsenkörper (4) mit dem zweiten Werkstoff ausgefüllt sind (14a).

4. Frontabschnitt nach Anspruch 1, **dadurch gekennzeichnet, daß** wenigstens eine der Durchbrechungen (14) eine sich von Außen nach Innen erweiternde Kontur (15) aufweist.

5. Frontabschnitt nach Anspruch 1, wobei das axiale Segment (7,10,k1) sich in axialer Richtung über einen Längenabschnitt (k1), insbesondere länger als zumindest die Hälfte des Durchmesser der Öffnung (7) an ihrem vorderen Ende, erstreckt und das Kanalsegment in Umfangsrichtung als einen Wandabschnitt zumindest einen umfänglichen Abschnitt (10a,10b;Fig.6c) einer Innenfläche des Hülsenkörpers (4) besitzt.

6. Frontabschnitt nach Anspruch 1 oder 5, wobei das axiale Kanalsegment (7,10,k1) an seinem vollen Umfang von einer inneren Wandfläche (10) des Hülsenkörpers (4) nach radial außen begrenzt ist.

7. Frontabschnitt nach einem der Ansprüche 1 bis 6, **dadurch gekennzeichnet, daß** das Einspritzkanalsegment (7,10,k1) des Hülsenkörpers (4) in einem axialen Abstand (k2) vor der zumindest einen Durchbrechung (14) endet, um über zumindest ein zumindest axial oder radial - insbesondere schräg - orientiertes Verteilerkanalstück (25) im vorderen Abschnitt eines in Richtung auf das Einspritzkanalsegment (7,10) in den Hülsenkörper (4) einführbaren Kerns (20) zur Durchbrechung (14) verbindbar zu sein.

8. Frontabschnitt nach einem der Ansprüche 1 bis 7, wobei in einem vorderen Abschnitt eines in Richtung auf das Einspritzkanalsegment (7,10,k1) in den Hülsenkörper (4) einführbaren Kerns (20) ein dem Einspritzkanalsegment (7,10,k1) des Hülsenkörpers (4) nachgeordnetes Kanalstück (24,25;25a,25b;27;27a,27b) vorgesehen ist, das in einem axialen Abstand (k4) nach dem Beginn oder vorderen Ende der zumindest einen Durchbrechung (14) endet, um den zweiten Werkstoff zur zumindest einen Durchbrechung (14) zu leiten und sie damit auszufüllen.

9. Frontabschnitt nach einem der Ansprüche 2 bis 8, **dadurch gekennzeichnet, daß** das Einspritzkanalsegment (7,10) sich im Durchmesser von der Öffnung (7) ausgehend auf seiner axialen Länge (k1) um etwa 40% bis 60% erweitert, insbesondere ausgehend von einem Durchmesser unter 3 mm und auf einer Länge von mehr als dem Durchmesser.

10. Frontabschnitt nach Anspruch 1 oder 8, **dadurch gekennzeichnet, daß** das den Mantel (8) bildende und die zumindest eine Durchbrechung (14) ausfüllende Material - von dem das Einspritzkanalsegment (7,10;k1), insbesondere auch das nachgeordnete Kanalstück (24,25) des Kerns (20) beim Herstellvorgang ausfüllenden Material - im Bereich einer inneren Umfangsfläche (12) über eine zum Abtrennen, insb. Abscheren, geeignete Dünnstelle (45b,45a;45a',45b') trennbar ist, bzw. eine solche von außen verborgene Trennstelle (45c) aufweist.

11. Frontabschnitt nach Anspruch 1, bei dem der Zweitwerkstoff für den flächig ausgebildeten Mantel (8) ein griffelastischer Werkstoff ist.

12. Frontabschnitt nach Anspruch 1, bei dem der Erstwerkstoff des Hülsenkörpers (4) ein spröder, im Gebrauch praktisch unelastischer Werkstoff, wie ABS ist.

13. **Verfahren** zum Herstellen oder Gestalten eines Frontabschnitts eines Schreibgerätegehäuses, bei welchem Verfahren
(a) ein formhaltiger Hülsenkörper (4) mit einem Öffnungsende einer Öffnung (7) für ein Durchführen und radiales Stützen einer Mine und mit wenigstens einer Durchbrechung (14) in der Umfangswand hergestellt wird oder verwendet wird;
(b) ein den Hülsenkörper (4) außen umgebender flächiger Mantel (8) aus einem griffelastischen Werkstoff umfänglich aufgebracht wird,
(b1) indem der Werkstoff von der Öffnung (7) auf einem axial anschließenden Abschnitt (10,k1) radial geführt und begrenzt in das Innere des Hülsenkörpers (4) geleitet wird (30,31) und von dort - umgelenkt von zumindest einem Kanalstück in einem Kern (20;24,25;27;25a,25b;27a,27b) - über die zumindest eine radiale Durchbrechung (14) des Hülsenkörpers in einen äußeren Formraum (41,41a) gelangt;
(b2) im Formraum (41,41a) zu dem äußeren flächig umgebenden Mantel (8) ausgeformt wird.

14. Verfahren nach Anspruch 13, **dadurch gekennzeichnet, daß** ein Strom eines erweichten Zweitwerkstoffs (31) nach Eindringen in die Öffnung (7) im Inneren des Hülsenkörpers fließt, insbesondere zunächst im Querschnitt erweitert (10) wird, und dann durch die zumindest eine Durchbrechung (14) radial nach außen geleitet wird (25;25a,25b).

15. Verfahren nach Anspruch 13, **dadurch gekennzeichnet, daß** der Hülsenkörper (4) durch Spritztechnik hergestellt und dabei die zumindest eine Durchbrechung als spätere Durchtrittsöffnung (14) mit einem sich zum Inneren des Hülsenkörpers erweiternden Querschnitt, insb. einer Hinterschneidung, ausgespart bleibt.

16. Verfahren nach Anspruch 13, **dadurch gekennzeichnet, daß** der Hülsenkörper mit mehreren, über seinen Umfang verteilten Durchbrechungen (14) hergestellt wird und diese zur formschlüssigen Verankerung des Mantels am Hülsenkörper - bei fehlendem Stoffschluss - ausgefüllt werden (14a), wobei der von der Öffnung (7) und vom Inneren des Hülsenkörpers durch wenigstens eine von mehreren Durchbrechungen nach außen geleitete (24,25,25a,25b,27,27a,27b) Werkstoff die verbleibenden Durchbrechungen von dem äußeren Formraum (41) her erreicht und sie dadurch von außen ausgefüllt werden.

17. Verfahren nach einem der Ansprüche 16 bis 13, **dadurch gekennzeichnet, daß** vor dem Einspritzen des Zweitwerkstoffs das Innere des Hülsenkörpers (4) bis auf die Öffnung (7) und den anschließenden axialen Abschnitt (10,k1) mit einem Stempel (20;24,25) im wesentlichen ausgefüllt wird, um den Zweitwerkstoff zu der einen oder mehreren Durchbrechungen (14) zu leiten, insbesondere über einen inneren Hohlraum (24,25,25a,25b) im Stempelkopf (22) oder eine umfänglich zumindest teilweise offene Gestaltung (22b,22c) des vorderen Endes des Stempelkopfes.

18. Verfahren nach Anspruch 13, **dadurch gekennzeichnet, daß** ein Zweitwerkstoff mit elastischer Verformbarkeit (im erkalteten Zustand) verwendet wird und nach dem Einspritzen und Aushärten im Bereich des Übergangs vom Inneren des Hülsenkörpers zu der zumindest einen Durchbrechung durchtrennt wird (45a,45b;45a',45b'), insb. durch relatives axiales Herausziehen (40) eines Anguß-Kanalsegments (45) und seines zu der zumindest einen Durchbrechung führenden zumindest radial orientierten Zuführsegmentes (44a,44b).

19. Verfahren nach Anspruch 18, bei dem das herausgezogene Kanalsegment (45) einen entgegen der Entformungsrichtung ausgebildeten und mit einer Erweiterung (10) des Hülsenkörpers korrespondierenden Konusabschnitt (45k) aufweist.

20. Verfahren nach Anspruch 13, bei dem ein verfestigtes Kanalsegment (45) aus Zweitwerkstoff aus dem axialen Abschnitt (10,k1) mit Kraft herausgezogen (40) wird und dabei in Höhe der zumindest einen radialen Durchbrechung von dem Mantel (8) abgetrennt wird.

21. Verfahren nach Anspruch 13, bei dem der Hülsenkörper (4) in den Formraum (41) eingebracht wird und sich danach der Kern (20) in den Hülsenkörper (4) schiebt (46).

22. Verfahren nach Anspruch 13, wobei der Frontabschnitt ein Bereich eines langgestreckten Gehäuseschaftes ist.

23. Verfahren nach Anspruch 1, wobei der Hülsenkörper (4) aus formhaltigem, unelastischem Kunststoff gespritzt wird.

24. Frontabschnitt nach Anspruch 1, bei dem der seitliche Austritt des zweiten Werkstoffs radial erfolgt.

25. **Werkzeug** zur Herstellung oder zum Gestalten eines Frontabschnitts eines Schreibgerätegehäuses oder zur Durchführung eines Verfahrens gemäß Anspruch 13, wobei in eine Spritzkavität (41,41a) ein hülsenförmiger Rohling (4) mit einer vorderen Öffnung (7) und einer geringeren radialen Abmessung als die Spritzkavität (41) einsetzbar ist; mit einem langgestreckten Kern (20,22), um den Rohling zum Stützen innen auszufüllen, welcher Kern (20) am vorderen Ende (22,22b,22c) so ausgebildet ist, daß er dort entlang einer axialen Restlänge (k1,k2) im Durchmesser um so viel kleiner ist, daß ein durch die Öffnung (7) zugeführter, erweichter Werkstoff (30) in seiner radialen Erstreckung von zumindest einem Abschnitt (10a,10b) des inneren Umfangs des hülsenförmigen Rohlings geführt wird.

26. Werkzeug nach Anspruch 25, wobei der Kern (20,22) an seinem vorderen Ende entlang einer Restlänge (k1) einen Durchmesser von Null besitzt, also sich in diesen Abschnitt nicht erstreckt.

27. Werkzeug nach Anspruch 25, wobei der langgestreckte Kern (20) einen Kopfabschnitt (22;22a,22b,22c) aufweist, der ein inneres Kanalstück (24,25;25a,25b), einen umfänglich orientierten, auf der Außenseite des Kopfabschnittes angeordneten ringförmigen Durchlaßkanal (27) oder zumindest einen, vorzugsweise zwei radial offene Kanäle (27a,27b) aufweist.

28. Werkzeug nach Anspruch 27, wobei der Kopfabschnitt (22) rotationssymmetrisch spitz zuläuft (22b,26) oder die radial offenen Kanäle (27a,27b) einen jeweiligen Kanalgrund aufweisen, der sich von einer Spitze (26a) ausgehend nach radial außen im wesentlichen stetig erhöht.

29. Werkzeug nach Anspruch 26 oder 27, wobei der Kern nach der Restlänge (k1) vor dem Kern oder bei einem insoweit vorliegenden Kerndurchmesser von Null als inneres Kanalstück zwei sich kreuzende konische Kanalbohrungen (25a,25b) aufweist, die schief zur Achse des Kerns eingebracht sind und auf der axialen Höhe der zumindest einen Durchbrechung (14) seitlich aus dem Kern heraustreten, zur Ausbildung von abtrennbaren Angußsegementen (45a',45b') für den Zweitwerkstoff.

## Claims

1. Front section (1) of a housing of a writing implement, which section has a sleeve body (4) made from a rigid material and a jacket (8) made from a second material two-dimensionally surrounding the sleeve body on a considerable part of its axial length, wherein
(a) the sleeve body (4) has at least one radially orientated perforation (14) for lateral outlet of the second material to an outer peripheral region (4a) of the sleeve body (4);
(b) an opening (7) orientated to the front of a tip of the sleeve body (4) is designed as the start of a connecting axial segment (7, 10, k1) of an injection channel (38, 39, 10, 24, 25) for the second material.

2. Front section according to claim 1, wherein the axial segment connecting to the opening line or the opening end (7) is designed as a region (k1) of an inner surface of the sleeve body (4), in particular as a region (10) expanding towards the rear.

3. Front section according to claim 1 or 2, **characterised in that** the sleeve body (4) has two or more perforations (14) distributed over its periphery, which are filled (14a) with the second material for positive anchoring of the jacket (8) on the sleeve body (4).

4. Front section according to claim 1, **characterised in that** at least one of the perforations (14) has a contour (15) expanding from the outside inwards.

5. Front section according to claim 1, wherein the axial segment (7, 10, k1) extends in axial direction over a longitudinal section (k1), in particular longer than at least half of the diameter of the opening (7) at its front end, and the channel segment in peripheral direction as a wall section has at least one peripheral section (10a, 10b; Figure 6c) of an inner surface of the sleeve body (4).

6. Front section according to claim 1 or 5, wherein the axial channel segment (7, 10, k1) is defined radially outwards on its full periphery by an inner wall surface (10) of the sleeve body (4).

7. Front section according to one of claims 1 to 6, **characterised in that** the injection channel segment (7, 10, k1) of the sleeve body (4) terminates at an axial distance (k2) in front of the at least one perforation (14), in order to be connectable to the perforation (14) via at least one distributor channel piece (25) orientated at least axially or radially - in particular at an angle - in the front section of a core (20) which can be introduced into the sleeve body (4) in the direction of the injection channel segment (7, 10).

8. Front section according to one of claims 1 to 7, wherein a channel piece (24, 25; 25a, 25b; 27; 27a, 27b) arranged downstream of the injection channel segment (7, 10, k1) of the sleeve body (4), and which terminates at an axial distance (k4) after the start or front end of the at least one perforation (14), is provided in a front section of a core (2) which can be introduced into the sleeve body (4) in the direction of the injection channel segment (7, 10, k1), in order to pass the second material to the at least one perforation (14) and hence to fill it.

9. Front section according to one of claims 2 to 8, **characterised in that** the injection channel segment (7, 10) is expanded in diameter starting from the opening (7) on its axial length (k1) by about 40% to 60%, in particular starting from a diameter below 3 mm and on a length of more than the diameter.

10. Front section according to claim 1 or 8, **characterised in that** the material forming the jacket (8) and filling the at least one perforation (14) can be separated - from the material filling the injection channel segment (7, 10; k1), in particular also the channel piece (24, 25) of the core (20) arranged downstream during the production process - in the region of an inner peripheral surface (12) via a thin point (45b, 45a; 45a', 45b') suitable for separating off, in particular shearing off, or has such a separating point (45c) hidden from the outside.

11. Front section according to claim 1, in which the second material for the two-dimensionally designed jacket (8) is a material with resilient gripping properties.

12. Front section according to claim 1, in which the first material of the sleeve body (4) is a brittle material which is virtually non-resilient in use, such as ABS.

13. Process for producing or shaping a front section of a writing implement housing, in which process
(a) a rigid sleeve body (4) having an opening end of an opening (7) for passing through and radial support of a refill and is produced or is used having at least one perforation (14) in the peripheral wall;
(b) a two-dimensional jacket (8) surrounding the sleeve body (4) externally and made from a material with resilient gripping properties is applied peripherally,
(b1) in that the material is guided radially from the opening (7) to an axially connecting section (10, k1) and passed (30, 31) to a limited extent into the interior of the sleeve body (4) and from there - diverted by at least one channel piece in a core (20; 24, 25; 27; 25a, 25b; 27a, 27b) - passes into an outer moulding chamber (41, 41a) via the at least one radial perforation (14) of the sleeve body;
(b2) in the moulding chamber (41, 41a) shaping takes place to form the outer two-dimensionally surrounding jacket (8).

14. Process according to claim 13, **characterised in that** a stream of a softened second material (31) flows into the interior of the sleeve body after penetrating into the opening (7), in particular first of all is expanded (10) in cross-section, and then is passed (25; 25a, 25b) radially outwards through the at least one perforation (14).

15. Process according to claim 13, **characterised in that** the sleeve body (4) is produced by injection-moulding and thus the at least one perforation remains cut out as a later passage opening (14) having a cross-section expanding towards the interior of the sleeve body, in particular an undercut.

16. Process according to claim 13, **characterised in that** the sleeve body is produced having several perforations (14) distributed over its periphery and the latter are filled (14a) for positive anchoring of the jacket to the sleeve body - when there is no integral connection, wherein the material passed (24, 25, 25a, 25b, 27, 27a, 27b) from the opening (7) and from the interior of the sleeve body through at least one of several perforations to the outside reaches the remaining perforations from the outer moulding chamber (41) and they are thus filled from the outside.

17. Process according to one of claims 16 to 13, **characterised in that** before injection of the second material, the interior of the sleeve body (4) is essentially filled as far as the opening (7) and the connecting axial section (10, k1) with a die (20; 24, 25), in order to pass the second material to the one or more perforations (14), in particular via an inner cavity (24, 25, 25a, 25b) in the die head (22) or a peripherally at least partly open shape (22b, 22c) of the front end of the die head.

18. Process according to claim 13, **characterised in that** a second material having resilient deformability (in the cooled state) is used and after injection and curing in the region of the transition from the interior of the sleeve body to the at least one perforation is cut (45a, 45b; 45a', 45b'), in particular by relative axial removal (40) of a sprue channel segment (45) and its at least radially orientated supply segment (44a, 44b) leading to the at least one perforation.

19. Process according to claim 18, in which the removed channel segment (45) has a cone section (45k) formed counter to the mould-release direction and corresponding to an expansion (10) of the sleeve body.

20. Process according to claim 13, in which a solidified channel segment (45) made from second material is removed (40) by force from the axial section (10, k1) and is thus separated from the jacket (8) at the height of the at least one radial perforation.

21. Process according to claim 13, in which the sleeve body (4) is introduced into the moulding chamber (41) and then the core (20) is pushed (46) into the sleeve body (4).

22. Process according to claim 13, wherein the front section is a region of an elongated housing shaft.

23. Process according to claim 1, wherein the sleeve body (4) is injection-moulded from rigid, non-resilient plastic.

24. Front section according to claim 1, in which lateral outlet of the second material is effected radially.

25. Tool for producing or for shaping a front section of a writing implement housing or for carrying out a process according to claim 13, wherein a sleeve-like blank (4) with a front opening (7) and of a shorter radial dimension that the injection-moulding cavity (41) can be inserted into an injection-moulding cavity (41, 41a); having an elongated core (20, 22) in order to fill the blank for support on the inside, which core (20) is designed at the front end (22, 22b, 22c) so that it is so much smaller in diameter there along an axial residual length (k1, k2) that a softened material (30) supplied through the opening (7) is guided in its radial extension from at least one section (10a, 10b) of the inner periphery of the sleeve-like blank.

26. Tool according to claim 25, wherein the core (20, 22) has a diameter of zero at its front end along a residual length (k1), that is, does not extend into this section.

27. Tool according to claim 25, wherein the elongated core (20) has a head section (22; 22a, 22b, 22c) which has an inner channel piece (24, 25; 25a, 25b), a peripherally orientated, annular passage channel (27) arranged on the outer side of the head section or at least one, preferably two, radially open channels (27a, 27b).

28. Tool according to claim 27, wherein the head section (22) tapers (22b, 26) in rotationally symmetrical manner or the radially open channels (27a, 27b) have a particular channel base, which increases essentially continuously starting from a tip (26a) radially outwards.

29. Tool according to claim 26 or 27, wherein the core after the residual length (k1) in front of the core or in the case of a core diameter of zero, if present, as an inner channel piece, has two intersecting conical channel bores (25a, 25b), which are introduced at an angle to the axis of the core and emerge laterally from the core at the axial height of the at least one perforation (14), to form sprue segments (45a', 45b') for the second material which can be separated off.

## Revendications

1. Partie avant (1) d'un boîtier d'un auxiliaire d'écriture, laquelle partie comprend un corps de manchon (4) constitué par un matériau pouvant être moulé et un revêtement (8) constitué par un second matériau et entourant de manière plane le corps de manchon sur une partie essentielle de sa longueur axiale, dans laquelle
(a) le corps de manchon (4) comprend au moins une perforation (14) orientée dans le sens radial pour une sortie latérale du second matériau jusqu'à une zone périphérique (4a) extérieure du corps de manchon (4) ;
(b) une ouverture (7) orientée vers l'avant d'une pointe du corps de manchon (4) est réalisée comme début d'un segment axial contigu (7, 10, k1) d'un canal d'injection (38, 39, 10, 24, 25) pour le second matériau.

2. Partie avant selon la revendication 1, dans laquelle le segment axial se raccordant à la ligne d'ouverture ou à l'extrémité d'ouverture (7) est réalisé comme une zone (k1) d'une surface intérieure du corps de manchon (4), en particulier comme une zone (10) s'élargissant vers l'arrière.

3. Partie avant selon la revendication 1 ou 2, **caractérisée en ce que** le corps de manchon (4) comprend de manière répartie sur sa périphérie deux perforations (14) ou plus qui sont remplies (14a) avec le second matériau en vue de la fixation par complémentarité de forme du revêtement (8) sur le corps de manchon (4).

4. Partie avant selon la revendication 1, **caractérisée en ce qu'**au moins une des perforations (14) comprend un contour (15) s'élargissant depuis l'extérieur vers l'intérieur.

5. Partie avant selon la revendication 1, dans laquelle le segment axial (7, 10, k1) s'étend dans la direction axiale sur une partie longitudinale (k1), en particulier plus longue qu'au moins la moitié du diamètre de l'ouverture (7) sur son extrémité avant, et le segment de canal possède dans la direction périphérique comme partie de paroi au moins une partie périphérique (10a, 10b ; figure 6c) d'une surface intérieure du corps de manchon (4).

6. Partie avant selon la revendication 1 ou 5, dans laquelle le segment de canal axial (7, 10, k1) est délimité dans le sens radial vers l'extérieur sur l'ensemble de sa périphérie par une surface de paroi (10) intérieure du corps de manchon (4).

7. Partie avant selon l'une des revendications 1 à 6, **caractérisée en ce que** le segment de canal d'injection (7, 10, k1) du corps de manchon (4) se termine dans une distance axiale (k2) devant l'une des perforations (14), afin de pouvoir être relié à la perforation (14) par l'intermédiaire d'au moins un élément de canal distributeur (25) orienté au moins dans le sens axial ou radial - en particulier en biais - dans la partie avant d'un noyau (20) pouvant être introduit en direction du segment de canal d'injection (7, 10) dans le corps de manchon (4).

8. Partie avant selon l'une des revendications 1 à 7, dans laquelle un élément de canal (24, 25 ; 25a, 25b ; 27 ; 27a, 27b), en aval du segment de canal d'injection (7, 10, k1) du corps de manchon (4), est prévu dans une partie avant d'un noyau (20) pouvant être introduit dans le corps de manchon (4) en direction du segment de canal d'injection (7, 10, k1), lequel élément de canal se termine dans une distance axiale (k4) après le début ou l'extrémité avant de l'une des perforations (14), afin de guider le second matériau jusqu'à l'une des perforations (14) et d'en remplir celle-ci.

9. Partie avant selon l'une des revendications 2 à 8, **caractérisée en ce que** le diamètre du segment de canal d'injection (7, 10) s'élargit de sensiblement 40% à 60% à partir de l'ouverture (7) jusqu'à sa longueur axiale (k1), en particulier à partir d'un diamètre inférieur à 3 mm et jusqu'à une longueur supérieure au diamètre.

10. Partie avant selon la revendication 1 ou 8, **caractérisée en ce que** le matériau formant le revêtement (8) et remplissant l'une des perforations (14) peut être séparé du matériau remplissant le segment de canal d'injection (7, 10 ; k1), en particulier également l'élément de canal (24, 25) disposé en aval du noyau (20) lors du processus de fabrication - dans la zone d'une surface périphérique (12) intérieure par l'intermédiaire d'un point mince (45b, 45a ; 45a', 45b') approprié pour la séparation, en particulier le cisaillement, ou comprend un tel point de rupture (45c) caché de l'extérieur.

11. Partie avant selon la revendication 1, dans laquelle le second matériau pour le revêtement (8) réalisé de manière plane est un matériau élastique.

12. Partie avant selon la revendication 1, dans laquelle le premier matériau du corps de manchon (4) est un matériau cassant, pratiquement non élastique à l'utilisation, comme de l'ABS.

13. Procédé de fabrication ou de formation d'une partie avant d'un boîtier d'auxiliaire d'écriture, dans lequel
(a) un corps de manchon (4) pouvant être moulé comprenant une extrémité d'ouverture d'une ouverture (7) pour le passage et l'appui radial d'une mine et comprenant au moins une perforation (14) dans la paroi périphérique est fabriqué ou est utilisé ;
(b) un revêtement (8) plat composé d'un matériau élastique et entourant le corps de manchon (4) à l'extérieur est appliqué de manière périphérique,
(b1) en conduisant dans le sens radial le matériau depuis l'ouverture (7) jusqu'à une partie contiguë dans le sens axial (10, k1) et en le guidant (30, 31) de manière limitée à l'intérieur du corps de manchon (4) et en le faisant parvenir de là - de manière déviée par au moins un élément de canal dans un noyau (20 ; 24, 25 ; 27 ; 25a, 25b ; 27a, 27b) - par l'intermédiaire de l'une des perforations (14) radiales du corps de manchon dans un espace de moule (41, 41a) extérieur ;
(b2) en le démoulant dans l'espace de moule (41, 41a) par rapport au revêtement (8) extérieur enveloppant de manière plane.

14. Procédé selon la revendication 13, **caractérisé en ce qu'**un courant d'un second matériau (31) ramolli s'écoule après avoir pénétré dans l'ouverture (7) à l'intérieur du corps de manchon, est en particulier d'abord élargi (10) en section transversale, et est ensuite guidé (25 ; 25a, 25b) dans le sens radial vers l'extérieur à travers l'une des perforations (14).

15. Procédé selon la revendication 13, **caractérisé en ce que** le corps de manchon (4) est fabriqué par technique d'injection et ainsi, l'une des perforations, comme ouverture de passage (14) ultérieure comprenant une section transversale s'élargissant vers l'intérieur du corps du manchon, en particulier d'une contre-dépouille, reste évidée.

16. Procédé selon la revendication 13, **caractérisé en ce que** le corps de manchon est fabriqué avec plusieurs perforations (14) réparties sur sa périphérie et celles-ci sont remplies (14a) en vue de la fixation par complémentarité de forme du revêtement sur le corps de manchon - en l'absence d'une connexion par matière -, le matériau guidé (24, 25, 25a, 25b, 27, 27a, 27b) vers l'extérieur depuis l'ouverture (7) et depuis l'intérieur du corps de manchon à travers au moins l'une de plusieurs perforations atteignant les perforations restantes à partir de l'espace de moule (41) extérieur et celles-ci étant remplies de cette façon de l'extérieur.

17. Procédé selon l'une des revendications 16 à 13, **caractérisé en ce qu'**avant l'injection du second matériau, l'intérieur du corps de manchon (4) est rempli sensiblement jusqu'à l'ouverture (7) et la partie axiale contiguë (10, k1) comportant un poinçon (20 ; 24, 25), afin de guider le second matériau jusqu'à l'une des perforations (14) ou plusieurs de celles-ci, en particulier sur un espace creux (24, 25, 25a, 25b) intérieur dans la tête de poinçon (22) ou sur un profilage (22b, 22c), au moins en partie ouvert, sur la périphérie de l'extrémité avant de la tête de poinçon.

18. Procédé selon la revendication 13, **caractérisé en ce qu'**un second matériau présentant une déformabilité élastique (à l'état refroidi) est utilisé et sectionné (45a, 45b ; 45a', 45b') après l'injection et le durcissement dans la zone de la transition entre l'intérieur du corps de manchon et l'une des perforations, en particulier par une extraction (40) relative axiale d'un segment de canal de culot d'injection (45) et de son segment d'amenée (44a, 44b) orienté au moins dans le sens radial conduisant à l'une des perforations.

19. Procédé selon la revendication 18, dans lequel le segment de canal (45) extrait comprend une partie conique (45k) réalisée à l'encontre de la direction du démoulage et correspondant à un élargissement (10) du corps de manchon.

20. Procédé selon la revendication 13, dans lequel un segment de canal (45) fabriqué à partir du second matériau est extrait (40) par force de la partie axiale (10, k1) et est ainsi séparé à hauteur de l'une des perforations radiales du revêtement (8).

21. Procédé selon la revendication 13, dans lequel le corps de manchon (4) est introduit dans l'espace de moule (41) et le noyau (20) se déplace (46) après cela dans le corps de manchon (4).

22. Procédé selon la revendication 13, dans lequel la partie avant est une zone d'une tige de boîtier de forme allongée.

23. Procédé selon la revendication 1, dans lequel le corps de manchon (4) est injecté à partir d'une matière plastique non élastique, pouvant être moulée.

24. Partie avant selon la revendication 1, dans laquelle la sortie latérale du second matériau se fait de manière radiale.

25. Outil de fabrication ou de formation d'une partie avant d'un boîtier d'auxiliaire d'écriture ou de réalisation d'un procédé selon la revendication 13, dans lequel dans une cavité d'injection (41, 41a), une ébauche (4) en forme de manchon comprenant une ouverture (7) avant et présentant une faible dimension radiale peut être utilisée comme cavité d'injection (41) ; comprenant un noyau (20, 22) de forme allongée afin de remplir l'intérieur de l'ébauche en vue du support, lequel noyau (20) est réalisé sur l'extrémité avant (22, 22b, 22c) de telle sorte que son diamètre à cet endroit le long d'une longueur résiduelle (k1, k2) axiale soit d'autant beaucoup plus petit qu'un matériau (30) ramolli, amené à travers l'ouverture (7), soit guidé dans son extension radiale depuis au moins une partie (10a, 10b) de la périphérie intérieure de l'ébauche en forme de manchon.

26. Outil selon la revendication 25, dans lequel le noyau (20, 22) présente sur son extrémité avant le long d'une longueur résiduelle (k1) un diamètre nul, ne s'étendant par conséquent pas dans cette partie.

27. Outil selon la revendication 25, dans lequel le noyau (20) de forme allongée comprend une partie de tête (22 ; 22a, 22b, 22c), qui comprend un élément de canal (24, 25 ; 25a, 25b) intérieur, un canal de passage (27) annulaire disposé sur le côté extérieur de la partie de tête et orienté sur la périphérie ou au moins un canal, de préférence deux canaux (27a, 27b) ouverts dans le sens radial.

28. Outil selon la revendication 27, dans lequel la partie de tête (22) se termine en pointe (22b, 26) en symétrie de rotation ou les canaux (27a, 27b) ouverts dans le sens radial comprennent un fond de canal respectif, qui augmente sensiblement progressivement dans le sens radial vers l'extérieur à partir d'une pointe (26a).

29. Outil selon la revendication 26 ou 27, dans lequel le noyau comprend, après la longueur résiduelle (k1) devant le noyau ou dans le cas d'un diamètre de noyau nul dans cette mesure, comme élément de canal intérieur, deux alésages de canal (25a, 25b) coniques se croisant, qui sont introduits de manière inclinée par rapport à l'axe du noyau et sortent latéralement du noyau à hauteur axiale de l'une des perforations (14), afin de réaliser les segments de culot d'injection (45a', 45b') séparables pour le second matériau.
